(19) Europäisches Patentamt
European Patent Office
Office européen des brevets

(11) Veröffentlichungsnummer: **0 393 446 B1**

(12) **EUROPÄISCHE PATENTSCHRIFT**

(45) Veröffentlichungstag der Patentschrift: **22.06.94**

(51) Int. Cl.$^5$: **C08F 246/00**, C09D 157/04

(21) Anmeldenummer: **90106680.3**

(22) Anmeldetag: **06.04.90**

# (54) Verwendung von Hydroxyl- und Säureanhydridgruppen enthaltenden Copolymerisaten, als Bindemittel.

(30) Priorität: **19.04.89 DE 3912828**

(43) Veröffentlichungstag der Anmeldung:
**24.10.90 Patentblatt 90/43**

(45) Bekanntmachung des Hinweises auf die Patenterteilung:
**22.06.94 Patentblatt 94/25**

(84) Benannte Vertragsstaaten:
**AT BE CH DE ES FR GB IT LI NL SE**

(56) Entgegenhaltungen:
**EP-A- 0 103 254**
**DE-A- 1 810 057**
**FR-A- 2 264 824**

(73) Patentinhaber: **BAYER AG**

**D-51368 Leverkusen(DE)**

(72) Erfinder: **Wamprecht, Christian, Dr.**
**Bahnhofstrasse 51**
**D-4040 Neuss 22(DE)**
Erfinder: **Blum, Harald, Dr.**
**Auf dem Westkamp 1**
**D-4175 Wachtendonk 1(DE)**
Erfinder: **Pedain, Josef, Dr.**
**Haferkamp 6**
**D-5000 Köln 80(DE)**

**EP 0 393 446 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von Copolymerisaten, die sowohl freie Hydroxylgruppen als auch intramolekulare Carbonsäureanhydridgruppen in chemisch eingebauter Form enthalten, als Bindemittel oder Bindemittelkomponente in Ein- oder Zweikomponenten-Beschichtungsmitteln oder -Dichtmassen.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen als Bindemittel für Lacke und Beschichtungsmittel ist bereits bekannt.

Die FR-A-2 392 092 beschreibt Beschichtungskompositionen, bestehend aus hydroxylfunktionellen Polymeren und einem Esteranhydrid mit mindestens zwei Anhydridgruppen pro Molekül, wobei das Esteranhydrid ein Oligomer und Trimellithsäureanhydrid ist. Nachteilig ist dabei die sehr schlechte Löslichkeit der Anhydridkomponente in lacküblichen Lösungsmitteln, sowie die Unverträglichkeit mit den hydroxylfunktionellen Polymeren.

Die EP-A-48 128 beschreibt Beschichtungskompositionen, bestehend aus einer Hydroxylkomponente mit mindestens zwei Hydroxylgruppen pro Molekül, einer Anhydridkomponente mit mindestens zwei Anhydridgruppen pro Molekül und gegebenenfalls einer als Katalysator wirkenden Aminkomponente. Dabei können die katalytisch wirkenden Aminogruppen auch schon in der Hydroxylkomponente enthalten sein. Die beschriebene Verwendung von monomeren Aminoalkoholen wie z.B. Triethanolamin als Vernetzungsreagentien wirkt sich dabei sehr nachteilig auf die Lösungsmittelfestigkeit der fertigen Lacke aus, wenn eine ausreichend lange Standzeit erreicht werden muß. Eine ausreichend lange Standzeit von mehreren Stunden kann hierbei nämlich nur auf Kosten einer geringen Vernetzungsdichte erzielt werden, wobei Lackfilme erhalten werden, die nicht lösungsmittelbeständig sind.

Auch bei Verwendung von höhermolekularen Polyolen, die im übrigen oftmals zu Unverträglichkeiten mit dem anhydridgruppenhaltigen Copolymerisat führt, ist es kaum möglich, eine für die Praxis ausreichend lange Standzeit der Systeme zu erzielen.

Es war daher die der Erfindung zugrundeliegende Aufgabe, neue Bindemittel bzw. Bindemittelkomponenten zur Verfügung zu stellen, deren Aushärtung auf der Reaktion zwischen Säureanhydridgruppen und Hydroxylgruppen basiert, und die nicht mit den Nachteilen des aufgezeigten Standes der Technik behaftet sind, d.h., die eine für Lackanwendungen ausreichende Standzeit aufweisen und die je nach Anwendungsbereich bereits bei Raumtemperatur oder aber bei erhöhter Temperatur zu klaren, farblosen, vergilbungsbeständigen und lösungsmittelfesten Überzügen ausgehärtet werden können.

Diese Aufgabe konnte mit der nachstehend näher beschriebenen erfindungsgemäßen Verwendung gelöst werden.

Ähnliche Copolymerisate wie die erfindungsgemäß zu verwendenden sind bereits aus EP-A- 0 103 254 bekannt. Diese Copolymerisate, die ganz erhebliche Mengen an Carboxylgruppen aufweisen, sollen als Waschmittel-Zusätze verwendet werden.

Die DE-A-1 810 057 ihrerseits beschreibt quervernetzte Mischpolymere, die u.a. zur Herstellung von kosmetischen Gelen oder als Dickungsmittel auf dem Textilgebiet eingesetzt werden. Bei der Herstellung der quervernetzten Produkte können zwar Zwischenstufen entstehen, die noch nicht quervernetzt sind und den erfindungsgemäß einzusetzenden Verbindungen entsprechen, jedoch ist an keiner Stelle auch nur andeutungsweise von der erfindungsgemäßen Verwendung dieser Zwischenprodukte die Rede.

Die FR-A-2 264 824 beschreibt strahlenhärtbare Umsetzungsprodukte aus olefinisch ungesättigten Ausgangsverbindungen, die Additions- und Polykondensationsreaktionen zugänglich sind. Bei der Herstellung der olefinisch ungesättigten Verfahrensprodukte werden die Ausgangsmaterialien im Sinne von Additions- und Kondensationsreaktionen umgesetzt, so daß im Unterschied zu den erfindungsgemäß einzusetzenden Copolymerisaten olefinische Doppelbindungen übrig bleiben.

Gegenstand der Erfindung ist die Verwendung von Copolymerisaten mit einem als Gewichtsmittel bestimmten Molekulargewicht von 1.500 bis 75.000 von olefinisch ungesättigten Verbindungen, die sowohl

(i) 0,2 bis 6,0 Gew.-% an freien Hydroxylgruppen als auch

(ii) 1 bis 30 Gew.-% an Carbonsäureanhydridgruppen (berechnet als $C_4H_2O_3$)

chemisch gebunden enthalten, als Bindemittel in selbstvernetzenden, hitzehärtbaren Beschichtungsmitteln oder Dichtmassen.

Die erfindungsgemäß zu verwendenden Copolymerisate weisen ein, nach der Methode der Gelpermeationschromatographie bestimmbares, Molekulargewicht (Gewichtsmittel) von 1.500 bis 75.000, vorzugsweise 2.000 bis 60.000 und besonders bevorzugt 3.000 bis 40.000, auf. In den Copolymerisaten liegen sowohl chemisch eingebaute, freie Hydroxylgruppen in einer Menge von 0,2 bis 6,0 Gew.-%, vorzugsweise 0,4 bis 4,0 Gew.-%, als auch chemisch eingebaute intramolekulare, cyclische Carbonsäureanhydridgruppen der

Formel

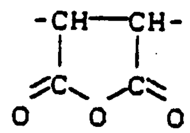

in einer Menge von 1 bis 30 Gew.-%, vorzugsweise 2 bis 25 Gew.-%, vor. Besonders bevorzugt liegen in den Copolymerisaten pro Säureanhydridgruppe 0,2 bis 8, insbesondere 0,4 bis 4, Hydroxylgruppen vor. Es handelt sich bei den Copolymerisaten um solche auf Basis von vorzugsweise einfach olefinisch ungesättigten Monomeren.

Zur Herstellung dieser Copolymerisate, d.h., als Ausgangsmaterialien beim erfindungsgemäßen Verfahren kommen drei Gruppen von olefinisch ungesättigten Monomeren zum Einsatz und zwar

a) Hydroxylgruppen enthaltende, olefinisch ungesättigte Monomere,

b) intramolekulare Säureanhydridgruppen enthaltende, olefinisch ungesättigte Monomere und

c) Hydroxylgruppen- und Säureanhydridgruppen-freie, nichtfunktionelle, olefinisch ungesättigte Monomere.

Die Monomeren a) werden im allgemeinen in einer Menge von 1 bis 50, vorzugsweise 2 bis 40 Gew.-Teilen, die Monomeren b) in einer Menge von 1 bis 30, vorzugsweise 2 bis 25 Gew.-Teilen, und die Monomeren c) in einer Menge von 20 bis 98, vorzugsweise 35 bis 96 Gew.-Teilen, eingesetzt, wobei außerdem zu berücksichtigen ist, daß die Anteile der einzelnen Monomeren in dem der Copolymerisation zuzuführenden Gemisch so bemessen werden, daß in den Copolymerisaten die obengenannten Mengen an chemisch eingebauten Hydroxyl- und Säureanhydrigruppen vorliegen. Der Gehalt der Copolymerisate an diesen Gruppierungen entspricht dem Gehalt des Monomergemischs an den gleichen Gruppen, da davon ausgegangen werden kann, daß die Copolymerisate bezüglich ihrer chemischen Zusammensetzung der chemischen Zusammensetzung des Monomergemischs entsprechen.

Das Gelingen der Herstellung solcher Copolymerisate mit sowohl chemisch eingebauten Hydroxyl- als auch Säureanhydridgruppen war keineswegs vorhersehbar, weil Säureanhydridgruppen bei höheren Temperaturen gegenüber Hydroxylgruppen reaktionsfähig sind. Trotzdem lassen sich durch Anwendung des erfindungsgemäßen Verfahrens diese neuen Copolymerisate in organischen Lösungsmitteln durch radikalische Copolymerisation herstellen.

Der besondere Vorteil der erfindungsgemäß zu verwendenden Copolymerisate besteht darin, daß sie die zur Vernetzung benötigten Gruppierungen in Form von Hydroxyl- und Säureanhydridgruppen gleichzeitig enthalten. Dadurch kann es im Vergleich zu den Zweikomponenten-Beschichtungssystemen des Standes der Technik nicht zu Unverträglichkeiten zwischen den Einzelkomponenten kommen, die oftmals für schlechten Verlauf, ungenügende Fülle und zu geringe Glanzwerte verantwortlich sind.

Bei den Monomeren a) handelt es sich um einfach olefinisch ungesättigte Alkohole, die vorzugsweise ein Molekulargewicht von 58 bis 500 und vorzugsweise aliphatisch gebundene Hydroxylgruppen aufweisen. Gut geeignet sind beispielsweise übliche Hydroxyalkylester der Acryl-und Methacrylsäure wie z.B. Hydroxyethyl(meth)acrylat, Hydroxypropyl(meth)acrylat, 4-Hydroxybutyl(meth)acrylat; Hydroxyalkylvinylether wie z.B. Hydroxyethylvinylether oder Hydroxybutylvinylether; Allylalkohol; Hydroxyderivate des (Meth)-acrylamids wie z.B. N-(3-Hydroxy-2,2-dimethylpropyl)-(meth)acrylamid; Umsetzungsprodukte von Glycidyl-(meth)acrylat mit Monocarbonsäuren; Umsetzungsprodukte von (Meth)acrylsäure mit Monoepoxidverbindungen; sowie Umsetzungsprodukte der zuvor genannten OH-funktionellen, olefinisch ungesättigten Verbindungen mit ε-Caprolacton oder Butyrolacton.

Typische Beispiele für Monomere b) sind z.B. Itaconsäureanhydrid oder Maleinsäureanhydrid, wobei Maleinsäureanhydrid bevorzugt ist.

Die Monomeren c) weisen im allgemeinen ein Molekulargewicht von 86 bis 400 auf. Es handelt sich um die üblichen Hydroxylgruppen- und Säureanhydridgruppen-freien, vorzugsweise einfach olefinisch ungesättigten Monomeren, wie sie auch bereits bei dem Verfahren des obengenannten Standes der Technik als Monomere eingesetzt worden sind. Typische Beispiele sind Ester der Acryl- und Methacrylsäure wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, N-Butylmethacrylat, Isobutylmethacrylat oder 2-Ethylhexylmethacrylat; Vinylaromaten wie beispielsweise Styrol, Vinyltoluol, α-Methylstyrol, α-Ethylstyrol, kernsubstituierte, gegebenenfalls Isomerengemische darstellende Diethylstyrole, Isopropylstyrole, Butylstyrole und Methoxystyrole; Vinylether wie beispielsweise Ethylvinylether, N-Propylvinylether, Isopropylvinylether, N-Butylvinylether und Isobutylvinylether; Vinylester wie beispielsweise Vinylacetat, Vinylpropionat und

Vinylbutyrat.

Bei der Durchführung der Copolymerisation können selbstverständlich jeweils beliebige Gemische der beispielhaft genannten Monomeren a) bis c) verwendet werden.

Die Herstellung der Copolymerisate kann durch Copolymerisation der beispielhaft genannten Monomeren a) bis c) nach üblichen radikalischen Polymerisationsverfahren erfolgen, wie beispielsweise Masse- oder Lösungspolymerisation.

Dabei werden die Monomeren bei Temperaturen von 60 bis 140°C, vorzugsweise 80 bis 120°C, in Gegenwart von Radikalbildnern und gegebenenfalls Molekulargewichtsreglern copolymerisiert.

Das Verfahren wird vorzugsweise in inerten Lösungsmitteln durchgeführt. Geeignete Lösungsmittel sind beispielsweise Aromaten wie Benzol, Toluol, Xylol, Ester wie Ethylacetat, Butylacetat, Hexylacetat, Heptylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon, Methyl-n-amylketon, Methyl-isoamylketon oder beliebige Gemische derartiger Lösungsmittel.

Das Verfahren kann kontinuierlich oder diskontinuierlich erfolgen. Üblicherweise wird in einem Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen laßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, kann jedoch auch bei Drücken bis zu 20 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1′-Azo-bis-1-cyclohexannitril und 2,2′-Azo-bis-isobuttersäurealkylester; symmetrische Diacylperoxide, z.B. Acetyl-, Propionyl- oder Butyrylperoxid, mit Brom-, Nitro-, Methyl- oder Methoxygruppen substituierte Benzoylperoxide, Laurylperoxide; symmetrische Peroxidicarbonate, z.B. Diethyl-, Diisopropyl-, Dicyclohexyl- sowie Dibenzoylperoxidicarbonat; tert.-Butylperoxy-2-ethylhexanoat, tert.-Butylperbenzoat oder tert.-Butyl-N-(2-, 3-oder 4-chlorphenylperoxy)-carbonat; Hydroperoxide wie beispielsweise tert.-Butylhydroperoxid, Cumolhydroperoxid; Dialkylperoxide wie Di-cumylperoxid; tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisationsreaktion anfallenden Lösungen der erfindungsgemäßen Copolymerisate können dann ohne weitere Aufarbeitung der erfindungsgemäßen Verwendung zugeführt werden. Selbstverständlich ist es jedoch auch möglich, die Copolymerisate destillativ von gegebenenfalls noch vorliegenden Restmengen an nicht umgesetzten Monomeren und Lösungsmittel zu befreien und die als Destillationsrückstand vorliegenden Copolymerisate der erfindungsgemäßen Verwendung zuzuführen.

Die Copolymerisate stellen wertvolle Bindemittel oder Bindemittelkomponenten für Ein- bzw. Zweikomponenten-Beschichtungsmittel dar. Aufgrund der Reaktionsfähigkeit der gleichzeitig vorliegenden Säureanhydrid- und Hydroxylgruppen bei Hitzeeinwirkung handelt es sich um bei Raumtemperatur lagerstabile, unter Einbrennbedingungen vernetzbare Einkomponenten-Bindemittel, die daher ohne Zugabe weiterer Komponenten als hitzehärtbare Einkomponentensysteme verarbeitet werden können.

Ferner besteht jedoch auch die Möglichkeit der Anwendung als Bindemittelkomponente für raumtemperaturhärtende Zweikomponenten-Bindemittel. Dazu bedarf es jedoch der Zugabe einer Katalysatorkomponente, die die Reaktionsfähigkeit der Säureanhydridgruppen gegenüber den Hydroxylgruppen so weit steigert, daß bereits bei niedrigen Temperaturen, wie z.B. Raumtemperatur, eine Vernetzungsreaktion einsetzt.

Solche Katalysatoren sind vorzugsweise tert. Aminogruppen enthaltende Verbindungen. Es kann sich dabei um Verbindungen handeln, die entweder gegenüber Säureanhydridgruppen inert sind oder aber zusätzlich zur tert. Aminogruppe eine gegenüber Säureanhydridgruppen reaktionsfähige Gruppe (Hydroxylgruppe, primäre oder sekundäre Aminogruppe) aufweisen. Im zweiten Fall handelt es sich um einbaufähige Katalysatoren, die nach der Vermischung mit den Copolymerisaten mit einem Teil der vorliegenden Säureanhydridgruppen unter Ausbildung von Halbester- oder Halbamidgruppierungen abreagieren, wobei

diese Reaktion im wesentlichen gleichzeitig mit der durch den Katalysator beschleunigten Reaktion zwischen eingebauten Säureanhydridgruppen und eingebauten Hydroxylgruppen abläuft. In beiden Fällen (inerte bzw. reaktionsfähige Katalysatoren) stellen die Katalysatoren im Prinzip eine zweite Bindemittelkomponente dar, so daß die Systeme als "Zweikomponenten-System" bezeichnet werden können, die nach Vereinigung der beiden Komponenten (Copolymerisate bzw. Katalysatoren) bei Raumtemperatur eine Topfzeit von ca. 2 bis 8 Stunden aufweisen und schließlich zu hochwertigen, vernetzten Kunststoffen, insbesondere Flächengebilden, ausreagieren.

Als Katalysatoren geeignete Verbindungen sind beispielsweise tert. Amine des Molekulargewichtsbereichs 73 bis 300 wie Ethyldimethylamin, Diethylmethylamin, Triethylamin, Ethyldiisopropylamin, Tributylamin, 1-Methylpyrrolidin, 1-Methylpiperidin, 1,4-Dimethylpiperazin, 1,4-Diazabicyclo(2,2,2)octan oder 1,8-Diazabicyclo(5,4,0)-undec-7-en, N,N-Dimethylethanolamin, N,N-Dibutylethanolamin, 1-Amino-3-(dimethylamino)-propan oder 1-Amino-2-(diethylamino)-ethan.Es können auch beliebige Gemische der beispielhaft genannten tert.-Amine als Komponente B) eingesetzt werden.

Weiterhin ist es auch möglich, organische Verbindungen mit mindestens einer tert. Aminogruppe einzusetzen, die ein Molekulargewicht von mehr als 300 besitzen. Solche Substanzen können Umsetzungsprodukte von olefinisch ungesättigten (Meth)Acrylatgruppen aufweisenden Verbindungen mit sekundären Aminen sein, z,B. das Umsetzungsprodukt aus 1 Mol Trimethylolpropantriacrylat und 3 Mol Di-n-butylamin. Aber auch Umsetzungsprodukte von Polyisocyanaten mit N,N-Dialkylalkanolaminen, wie z.B, das Umsetzungsprodukt aus 1 Mol biuretisiertem Polyisocyanat auf Basis von Hexamethylendiisocyanat und 3 Mol N,N-Dimethylethanolamin, können zum Einsatz gelangen. Die Katalysatoren werden bei der Herstellung von bei Raumtemperatur aushärtenden Zweikomponenten-Systemen im allgemeinen in solchen Mengen eingesetzt, die einem Gehalt der Bindemittelkombination an tert.-Stickstoff (berechnet als N, Atomgewicht = 14) von 0,001 bis 1,0, vorzugsweise 0,01 bis 0,5 Gew,-%, bezogen auf Feststoffgehalt, entsprechen,

Beschichtungsmittel, die als Bindemittel bzw. Bindemittelkomponenten erfindungsgemäß zu verwendende Copolymerisate enthalten, können auch noch weitere Hilfs- und Zusatzmittel wie beispielsweise Lösungs- bzw, Verdünnungsmittel, Verlaufshilfsmittel, Antioxidantien oder UV-Absorber enthalten.

Geeignete Lösungs- bzw. Verdünnungsmittel sind beispielsweise jene der bereits oben bei der Herstellung der Copolymerisate beispielhaft genannten Art. Sie werden im allgemeinen in solchen Mengen mitverwendet, die zur Einstellung von geeigneten Verarbeitungsviskositäten der erfindungsgemäßen Bindemittel erforderlich sind. Der Festgehalt der der erfindungsgemäßen Verwendung zuzuführenden erfindungsgemäßen Kompositionen liegt im allgemeinen zwischen 20 und 80 Gew.-%. Durch Verwendung geeigneter, niedermolekularer Copolymerisate ist es jedoch prinzipiell auch möglich, den Lösungs- bzw. Verdünnungsmittelgehalt noch weiter zu reduzieren.

Neben diesen Hilfs- und Zusatzmitteln können die Beschichtungsmittel selbstverständlich auch noch weitere Hilfs- und Zusatzmittel wie beispielsweise Pigmente oder Füllstoffe enthalten.

Die Herstellung der Beschichtungsmittel erfolgt durch Abmischung der Einzelkomponenten, wobei insbesondere jedoch auch eine Ausführungsform denkbar ist, derzufolge die Lösungs- bzw. Verdünnungsmittel auch schon während der Herstellung der Copolymerisate zugegen sind, wie dies vorstehend bei der Herstellung der Copolymerisate beschrieben worden ist.

Wie bereits oben ausgeführt, liegen in den Copolymerisaten für jede Säureanhydridgruppe 0,2 bis 8, vorzugsweise 0,4 bis 4 und besonders bevorzugt 0,8 bis 2 Hydroxylgruppen vor. Im Falle der Verwendung von Katalysatoren, die gegenüber Anhydridgruppen reaktionsfähige Gruppen aufweisen, kann es zweckmäßig sein, das Verhältnis von Anhydridgruppen zu Hydroxylgruppen in den Copolymerisaten entsprechend so zu erhöhen, daß für jede Säureanhydridgruppe insgesamt 0,2 bis 8, vorzugsweise 0,4 bis 4 und besonders bevorzugt 0,8 bis 2 Hydroxylgruppen im gebrauchsfertigen Beschichtungsmittel vorliegen. Die im wesentlichen Katalysator-freien, Hitze-vernetzbaren, vorzugsweise in inerten Lösungs- bzw. Verdünnungsmitteln gelösten Einkomponenten-Bindemittel sind im allgemeinen mehrere Monate lagerstabil. Die Zweikomponentensysteme, die Katalysatoren der beispielhaft genannten Art in den genannten Mengen enthalten, weisen, wie bereits oben ausgeführt, im allgemeinen eine Topfzeit von mehreren Stunden auf. Die Einkomponentensysteme härten durch Selbstvernetzung bei Temperaturen von ca. 150 bis 200 °C, die Zweikomponentensysteme bereits bei Raumtemperatur zu Beschichtungen mit hochwertigen mechanischen Eigenschaften aus.

Die Bindemittel können auch direkt, ohne weitere Zusätze, zur Herstellung von klaren Überzügen verwendet werden. In der Regel werden jedoch die beispielhaft genannten Hilfs- und Zusatzstoffe mitverwendet.

Die erfindungsgemäßen Einkomponenten-Beschichtungsmittel eignen sich zur Beschichtung von beliebigen Hitze-resistenten Substraten. Ihre Verarbeitung erfolgt in an sich bekannter Weise. Die erfindungsgemäßen Zweikomponentensysteme eignen sich nicht nur zur Herstellung von Beschichtungsmitteln sondern auch zur Herstellung von Dichtmassen, die ihrerseits nach bekannten Methoden wie Spritzen, Streichen,

Tauchen, Fluten, Gießen, Weißen auf beliebige, gegebenenfalls bereits vorbehandelte Untergründe wie z.B. Metall, Holz, Glas, Keramik, Stein, Beton, Kunststoffe, Textilien, Leder, Pappe und Papier aufgetragen werden.

In den nachfolgenden Beispielen beziehen sich alle Angaben in Prozenten und Teilen, falls nicht anders vermerkt, auf das Gewicht.

## Beispiele

### I Allgemeine Herstellungsvorschrift für die Hydroxyl-und Anhydridgruppen enthaltenden Copolymerisate $A_1$ bis $A_6$

In einem 3-l-Reaktionsgefäß mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 2 Stunden) und Teil III (Zugabe über einen Zeitraum von insgesamt 2,5 Stunden) zudosiert. Anschließend wird 2 Stunden bei der Reaktionstemperatur nachgerührt.

Die Reaktionstemperaturen und die Zusammensetzungen der Teile I bis III sind in Tabelle I, zusammen mit den Kenndaten der erhaltenen Copolymerisate aufgeführt.

### II Herstellung der erfindungsgemäßen Beschichtungsmittel

a) Die Filmhärtung unter Einbrennbedingungen

Die Copolymerisate $A_1$ bis $A_6$ werden gegebenenfalls durch Zugabe eines organischen Lösungs- bzw. Verdünnungsmittels auf eine verarbeitungsfähige Viskosität eingestellt. Die Filme werden mit einem Filmzieher auf Prüfbleche aufgezogen, wobei die Naßfilmstärke

Tabelle I (Mengenangaben in g)

| Copolymerisate | $A_1$ | $A_2$ | $A_3$ | $A_4$ | $A_5$ | $A_6$ |
|---|---|---|---|---|---|---|
| **Teil I** | | | | | | |
| Butylacetat | 680 | 680 | 680 | 680 | 880 | 880 |
| **Teil II** | | | | | | |
| Butylacrylat | 468 | 468 | 474 | | | |
| Butylmethacrylat | | | | 286 | | 196 |
| Methylmethacrylat | 180 | 180 | | 234 | 324 | 176 |
| Styrol | 234 | 234 | 352 | 294 | 246 | 196 |
| Hydroxyethylacrylat | | | | 194 | | |
| Hydroxyethylmethacrylat | | 172 | | | 254 | 254 |
| Hydroxypropylmethacrylat | 172 | | 206 | | | |
| Maleinsäureanhydrid | 118 | 118 | 140 | 164 | 156 | 158 |
| **Teil III** | | | | | | |
| tert.-Butylperoxy-2-ethylhexanoat (70 %ig) | 70 | 70 | 70 | 70 | 58 | 58 |
| Butylacetat | 78 | 78 | 78 | 78 | 82 | 82 |
| Polymerisationstemperatur (°C) | 100 | 100 | 100 | 100 | 100 | 100 |
| Festgehalt (%) | 59,2 | 59,6 | 59,5 | 59,6 | 50,1 | 49,3 |
| Viskosität (23°C, mPa.s) | 2866 | 4184 | 3577 | 13546 | 80520 | 28037 |
| Molverhältnis Anhydrid-/Hydroxylgruppen ca. | 1:1 | 1:1,1 | 1:1 | 1:1 | 1:1,2 | 1:1,2 |

150 µm beträgt. Nach 5 Min. Ablüften bei Raumtemperatur werden die beschichteten Prüfbleche 30 Min. bei 160 °C gelagert. Danach werden sie auf Raumtemperatur abgekühlt. Man erhält auf diese Weise klare, farblose, vernetzte Filme mit guten optischen und mechanischen Werten.

Die Lösungsmittelfestigkeit wird durch einen Wischtest mit einem Methylisobutylketon (MIBK)-getränkten Wattebausch geprüft. Angegeben wird die Anzahl der Doppelhübe, nach denen der Film ohne

sichtbare Veränderung bleibt. Mehr als 200 Doppelhübe pro Film wurden nicht durchgeführt.

In der nachfolgenden Tabelle II werden die Lösungsmittelfestigkeiten der Filme, basierend auf den Copolymerisaten $A_1$ bis $A_6$, nach Härtung bei 160 °C angegeben.

Tabelle II

| Verwendungsbeispiel | 1 | 2 | 3 | 4 | 5 | 6 |
|---|---|---|---|---|---|---|
| Lackfilm basierend auf Copolymerisat | $A_1$ | $A_2$ | $A_3$ | $A_4$ | $A_6$ | $A_6$ |
| MIBK-Wischtest: Anzahl der Doppelhübe | 80 | 100 | 120 | 130 | 150 | 140 |

b) Filmhärtung bei Raumtemperatur

Die Copolymerisate $A_1$ bis $A_6$ werden mit einem tertiären Amin bei Raumtemperatur vermischt und gegebenenfalls durch Zugabe eines organischen Lösungs-und Verdünnungsmittels auf eine verarbeitungsfähige Viskosität eingestellt. Die Filme werden mit einem Filmzieher auf Prüfbleche aufgezogen, wobei die Naßfilmstärke 150 µm beträgt. Die so bei Raumtemperatur aufgezogenen Filme waren alle spätestens nach 60 Min. klebfrei durchgetrocknet. Nach Alterung, d.h., nach 24 Stunden Trocknung bei Raumtemperatur, erhält man klare, farblose, vernetzte Filme mit guten filmoptischen und mechanischen Werten.

Die angesetzten Lackmischungen weisen durchweg eine Standzeit von mehreren Stunden auf. Die Lösungsmittelfestigkeit wird wie zuvor beschrieben ermittelt.

In der folgenden Tabelle III werden die Zusammensetzungen der Bindemittelkombinationen und die Lösungsmittelfestigkeit als Grad der Vernetzung aufgeführt.

Tabelle III

| Verwendungsbeispiel | 1 | 2 | 3 | 4 | 5 | 6 |
|---|---|---|---|---|---|---|
| Komponente A | 40,0 g $A_1$ | 40,0 g $A_2$ | 40,0 g $A_3$ | 40,0 g $A_4$ | 40,0 g $A_5$ | 40,0 g $A_6$ |
| N,N-Dimethylethanolamin | 0,1 g | 0,1 g | | | 0,1 g | 0,1 g |
| Triethylamin | | | 0,1 g | 0,1 g | | |
| Butylacetat | 10,0 g | 10,0 g | 10,0 g | 15,0 g | 30,0 g | 20,0 g |
| Standzeit | > 8 h | > 2 h | > 8 h | > 8 h | > 2 h | > 2 h |
| MIBK-Wischtest nach 24 h Raumtemperatur, Anzahl der Doppelhübe | 70 | 80 | 100 | 120 | 140 | 130 |

## Patentansprüche

1. Verwendung von Copolymerisaten mit einem als Gewichtsmittel bestimmten Molekulargewicht von 1.500 bis 75.000 von olefinisch ungesättigten Verbindungen, die sowohl

(i) 0,2 bis 6,0 Gew.-% an freien Hydroxylgruppen als auch
(ii) 1 bis 30 Gew.-% an Carbonsäureanhydridgruppen (berechnet als $C_4H_2O_3$)
chemisch gebunden enthalten als Bindemittel in selbstvernetzenden, hitzehärtbaren Beschichtungsmitteln oder Dichtmassen.

**2.** Verwendung gemaß Anspruch 1 als Bindemittelkomponente in bei Raumtemperatur härtbaren Zweikomponenten-Beschichtungsmitteln oder -Dichtmassen, welche als weitere Bindemittelkomponente tertiäre Aminogruppen aufweisende, organische Verbindungen enthalten.

**3.** Verwendung gemaß Anspruch 2, dadurch gekennzeichnet, daß die Bindemittel aus einem Gemisch aus
A) Copolymerisaten gemäß Anspruch 1 und
B) die Additionsreaktion zwischen den funktionellen Gruppen der Komponente A) beschleunigenden, tertiäre Aminogruppen aufweisenden, Katalysatoren B), die gegebenenfalls gegenüber Carbonsäureanhydridgruppen reaktionsfähige Hydroxyl- oder Aminogruppen aufweisen, bestehen.

## Claims

**1.** The use of copolymers having a weight average molecular weight of 1,500 to 75,000 of olefinically unsaturated compounds which contain both
(i) 0.2 to 6.0% by weight free hydroxyl groups and
(ii) 1 to 30% by weight carboxylic anhydride groups (expressed as $C_4H_2O_3$)
in chemically bound form,
as binders in self-crosslinking, heat-curing coating or sealing compounds.

**2.** The use claimed in claim 1 as a binder component in two-component coating or sealing compounds curable at room temperature which contain organic compounds containing tertiary amino groups as a further binder component.

**3.** The use claimed in claim 2, characterized in that the binders consist of a mixture of
A) copolymers according to claim 1 and
B) catalysts B) containing tertiary amino groups which accelerate the addition reaction between the functional groups of component A) and which optionally contain hydroxyl or amino groups reactive to carboxylic anhydride groups.

## Revendications

**1.** Utilisation de copolymères de poids moléculaire, déterminé en moyenne en poids, 1 500 à 75 000, de composés à insaturation oléfinique contenant à la fois à l'état chimiquement combiné :
(i) 0,2 à 6,0 % en poids de groupes hydroxy libres, et
(ii) 1 à 30 % en poids de groupes anhydride d'acide carboxylique (exprimé en $C_4H_2O_3$),
en tant que liants dans des produits de revêtement ou masses d'étanchéité autoréticulants, durcissables à la chaleur.

**2.** Utilisation selon la revendication 1, en tant que composants de liants dans des produits de revêtement ou masses d'étanchéité à deux composants durcissables à température ambiante et contenant en tant qu'autres composants du liant des composés organiques à groupes amino tertiaires.

**3.** Utilisation selon la revendication 2, caractérisée en ce que les liants consistent en un mélange de :
A) des copolymères selon la revendication 1, et
B) des catalyseurs à groupes amino tertiaires accélérant la réaction d'addition entre les groupes fonctionnels du composant A), et qui contiennent le cas échéant des groupes hydroxy ou amino réactifs avec les groupes anhydride d'acide carboxylique.